(19) Europäisches Patentamt
European Patent Office
Office européen des brevets

(11) Veröffentlichungsnummer: **0 064 221**
B1

(12) **EUROPÄISCHE PATENTSCHRIFT**

(45) Veröffentlichungstag der Patentschrift: **31.07.85**

(51) Int. Cl.⁴: **C 09 B 67/22**, C 09 B 29/085, D 06 P 3/36

(21) Anmeldenummer: **82103366.9**

(22) Anmeldetag: **21.04.82**

(54) **Marineblaue Farbstoffmischungen.**

(30) Priorität: **02.05.81 DE 3117366**

(43) Veröffentlichungstag der Anmeldung: **10.11.82 Patentblatt 82/45**

(45) Bekanntmachung des Hinweises auf die Patenterteilung: **31.07.85 Patentblatt 85/31**

(84) Benannte Vertragsstaaten: **CH DE FR GB IT LI**

(56) Entgegenhaltungen:
**EP - A - 0 034 715**

**PATENTS ABSTRACTS OF JAPAN, Band 4, Nr. 119, 23. August 1980, Seite 87C22;**
**PATENTS ABSTRACTS OF JAPAN, Band 5, Nr. 85, 3. Juni 1981, Seite 757C57;**

(73) Patentinhaber: **BASF Aktiengesellschaft, Carl-Bosch-Strasse 38, D-6700 Ludwigshafen (DE)**

(72) Erfinder: **Bergmann, Udo, Dr., Merckstrasse 26, D-6100 Darmstadt (DE)**
Erfinder: **Degen, Helmut, Wildstrasse 32, D-6710 Frankenthal (DE)**
Erfinder: **Hansen, Guenter, Dr., Alwin-Mittasch-Platz 8, D-6700 Ludwigshafen (DE)**
Erfinder: **Krallmann, Reinhold, Bachweg 2, D-6719 Weisenheim (DE)**
Erfinder: **Kermer, Wolf-Dieter, Dr., Im Schlittweg 4, D-6701 Fussgoenheim (DE)**

**EP 0 064 221 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft marineblaue Farbstoffmischungen, die als wesentliche Komponenten Verbindungen der allgemeinen Formel I

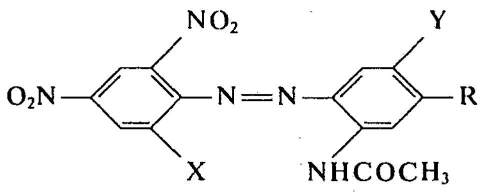

(I)

enthalten, wobei

X Chlor oder Brom,
Y Methoxy oder Äthoxy und

R 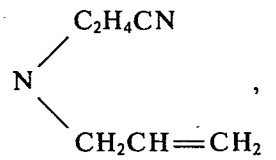 , $NHC_2H_4CN$, $NHCH_2CH{=}CH_2$ oder $N(C_2H_4OCOCH_3)_2$

sind und wobei der Farbstoff der angegebenen Formel mit X = Br, Y = $OCH_3$ oder $OC_2H_5$ und R = $N(C_2H_4OCOCH_3)_2$ mit 25–45% bezogen auf das Gesamtgewicht der Mischung vorliegt.

Die Farbstoffe mit

R = 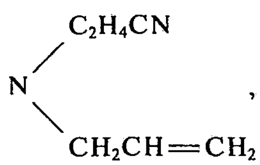 , R = $NHC_2H_4CN$ und $NHCH_2CH{=}CH_2$

liegen vorzugsweise zu 35–60%, 0,8 bis 12% bzw. 3 bis 20% in der Mischung vor.

Erfindungsgemäße Mischungen zeichnen sich durch vorzügliches färberisches und finishtechnisches Verhalten aus und ergeben auf synthetischen Polyestern marineblaue Färbungen mit sehr guten Echtheiten.

Hervorzuheben sind die hohe Farbstärke, das im Bereich von 120–140°C, vorzugsweise 125°–135°C, temperaturunabhängige Aufziehvermögen beim HT-Verfahren und die bei Thermosolverfahren erniedrigte Fixiertemperatur.

Zur Herstellung erfindungsgemäßer Mischungen kann man die Einzelkomponenten mechanisch mischen oder getrennt nach Diazokomponenten oder Kupplungskomponenten Mischungen herstellen und diese wiederum vereinigen.

Einzelheiten der Herstellung und Anwendung können den Beispielen entnommen werden, in denen sich Angaben über Teile und Prozente, sofern nicht anders vermerkt, auf das Gewicht beziehen.

Aus den japanischen Offenlegungsschriften 8 075 449 und 8 130 463 sind vergleichbare Mischungen bekannt, die sich jedoch in der Konstitution der Komponenten deutlich unterscheiden.

Beispiel 1

Marineblaue Farbstoffe, der der allgemeinen Formel I

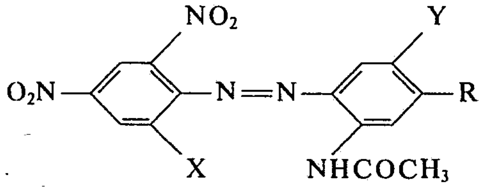

(I)

entsprechen, werden auf an sich bekannte Weise hergestellt und durch mechanische Mischung zu den erfindungsgemäßen Farbstoffgemischen vereinigt.

47 Teile des Farbstoffs mit X = Cl, Y = $OCH_3$,

R = 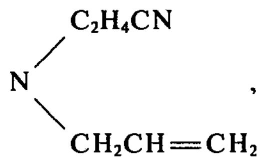

9 Teile des Farbstoffs mit X = Cl, Y = $OCH_3$, R = $NHC_2H_4CN$, 9 Teile des Farbstoffs mit X = Cl, Y = $OCH_3$, R = $NHCH_2CH{=}CH_2$ und 35 Teile des Farbstoffs mit X = Br, Y = $OCH_3$ und R = $N(C_2H_4OCOCH_3)_2$ werden in einer Kugelmühle vermischt und ergeben 100 Teile einer erfindungsgemäßen Farbstoffmischung.

Die Mischung ergibt auf synthetischem Polyester farbstarke marineblaue Färbungen mit guten Echtheiten.

## Beispiel 2

Mechanisches Vermischen von 47 Teilen des Farbstoffs mit

X = Cl, Y = $OCH_3$,

R = 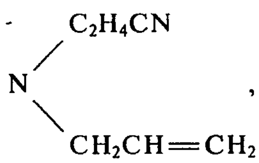 9 Teilen des Farbstoffs mit X = Cl,

Y = $OCH_3$, R = $NHC_2H_4CN$, 9 Teilen des Farbstoffs mit X = Cl, Y = $OCH_3$, R = $NHCH_2CH = CH_2$ und 35 Teilen des Farbstoffs mit X = Br, Y = $OC_2H_5$ und R = $N(C_2H_4OCOCH_3)_2$ liefert 100 Teile einer Farbstoffmischung die dem Farbstoffgemisch nach Beispiel 1 coloristisch gleicht.

## Beispiel 3

a) 524 Teile 2,4-Dinitro-6-bromanilin werden in 2100 Teilen konzentrierter Schwefelsäure mit 650 Teilen Nitrosylschwefelsäure (ca. 42%ig) umgesetzt.

b) 412 Teile 3-(N-Allyl-N-2'-cyanethyl-amino)-4-methoxy-acetanilid, 61 Teile 3-(N-Allyl-amino)-4-methoxy-acetanilid und 58 Teile 3-(N-2'-Cyanethyl-amino)-4-methoxy-acetanilid werden in einer Mischung aus 5000 Teilen Wasser, 92 Teilen konzentrierter Schwefelsäure und 20 Teilen Amidosulfonsäure vorgelegt und nach Zugabe von 7000 Teilen Eis unter Rühren bei maximal 0°C mit der unter a) bereiteten Diazoniumsalzlösung umgesetzt. Man erhält 1009 Teile einer Farbstoffmischung, die im wesentlichen Farbstoffe der allgemeinen Formel II enthält,

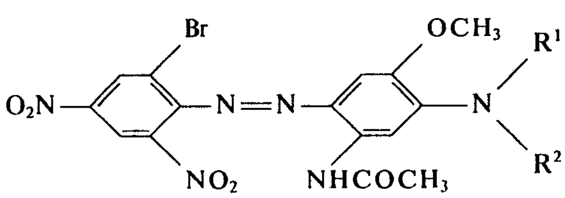 (II)

bestehend aus ca. 750 Teilen des Farbstoffs mit $R^1 = C_2H_4CN$, $R^2 = CH_2CH{=}CH_2$, ca. 110 Teilen des Farbstoffs mit $R^1 = C_2H_4CN$, $R^2 = H$ und ca. 120 Teilen des Farbstoffs mit $R^1 = CH_2CH{=}CH_2$, $R^2 = H$.

c) 65 Teile der nach Beispiel 3b bereiteten Farbstoffmischung werden mit 35 Teilen des Farbstoffs der allgemeinen Formel mit X = Br, Y = $OCH_3$, R = $N(C_2H_4OCOCH_3)_2$ mechanisch vermischt. Man erhält 100 Teile einer Farbstoffmischung, die auf synthetischen Polyestern farbstarke marineblaue Färbungen mit ausgezeichneten Echtheiten ergibt.

### Beispiel 4

65 Teile der nach Beispiel 3b bereiteten Farbstoffmischung ergeben beim mechanischen Mischen mit 35 Teilen des Farbstoffs der allgemeinen Formel I mit X = Br, Y = $OC_2H_5$, R = $N(C_2H_4OCOCH_3)_2$ 100 Teile einer Farbstoffmischung, die auf synthetischen Polyestern gleichfalls tiefe marineblaue Färbungen mit hervorragenden Echtheiten liefert.

### 5. Färbebeispiel 1

(HT-Verfahren)

100 Teile eines Polyestergarns werden in einem Bad gefärbt, das 2000 Teile Wasser, 1,5 Teile des entsprechend Beispiel 1 hergestellten, feinverteilten Farbstoffs und 2 Teile des durch Anlagerung von 50 Mol Ethylenoxid an 1 Mol Spermölalkohol und anschließendes Sulfonieren erhaltenen Produktes enthält.

Man beginnt mit dem Färben bei 60°C, erhöht innerhalb 20 Minuten auf 125°C und färbt bei dieser Temperatur weitere 90 Minuten.

Man erhält eine tiefe, marineblaue Färbung mit ausgezeichneten Echtheitseigenschaften.

### 6. Färbebeispiel 2

(Thermosolverfahren)

Ein Polyestergewebe wird auf einem Zweiwalzenfoulard mit einer Flotte imprägniert, die in 1000 Teilen 25 Teile des entsprechend Beispiel 3c hergestellten feinverteilten Farbstoffs, 10 Teile einer 20%igen wäßrigen Lösung des Copolymeren aus Acrylsäure und Acrylamid und 965 Teile Wasser enthält.

Nach dem Imprägnieren unter 60% Flottenaufnahme wird das Gewebe bei 120°C wischengetrocknet und während 45 Sekunden bei 215°C thermosoliert.

Man erhält eine tiefe, marineblaue Färbung mit sehr guten Echtheitseigenschaften.

### 7. Druckbeispiel

Ein Polyestergewebe wird mit einer Paste bedruckt, die in 1000 Teilen 40 Teile des feinverteilten, entsprechend Beispiel 4 hergestellten Farbstoffs, 600 Teile einer Kristallgummiverdickung, 20 Teile des Umsetzungsproduktes aus 1 Mol Rizinusöl mit 40 Mol Ethylenoxid, 10 Teile Triisobutylphosphat und 330 Teile Wasser enthält.

Man trocknet das bedruckte Gewebe und dämpft es 15 Minuten bei 1,5 atü.

Man erhält einen tiefen, marineblauen Druck mit ausgezeichneten Echtheitseigenschaften.

## Patentansprüche

1. Marineblaue Farbstoffmischungen, die als wesentliche Komponenten mindestens zwei Verbindungen der allgemeinen Formel I

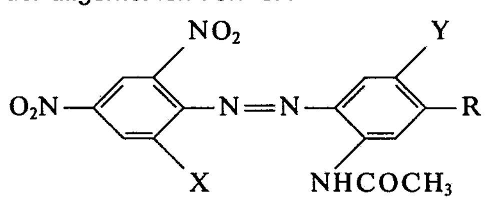

(I)

enthalten, wobei

X Chlor oder Brom,
Y Methoxy oder Äthoxy und
R 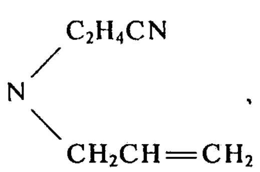, $NHC_2H_4CN$, $NHCH_2CH{=}CH_2$ oder $N(C_2H_4OCOCH_3)_2$

sind und wobei der Farbstoff der angegebenen Formel mit X = Br, Y = $OCH_3$ oder $OC_2H_5$ und R = $N(C_2H_4OCOCH_3)_2$ mit 25–45% bezogen auf das Gesamtgewicht der Mischung vorliegt.

2. Verwendung der Mischungen gemäß Anspruch 1 zum Färben von synthetischen Polyestern.

## Claims

1. A navy dye mixture which contains, as essential components, at least two compounds of the general formula I

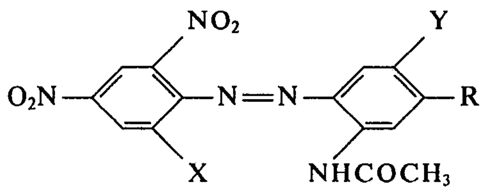

(I)

where

X is chlorine or bromine,
Y is methoxy or ethoxy and

R is 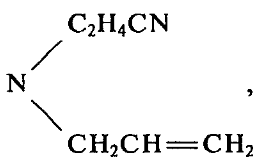 , $NHC_2H_4CN$, $NHCH_2CH{=}CH_2$ or $N(C_2H_4OCOCH_3)_2$,

and wherein the dye of the above formula, where X is Br, Y is $OCH_3$ or $OC_2H_5$ and R is $N(C_2H_4OCOCH_3)_2$, is present in an amount of 25 to 45%, based on the total weight of the mixture.

2. The use of a mixture as claimed in claim 1 for dyeing a synthetic polyester.

## Revendications

1. Mélanges de colorants bleu marine qui contiennent, en tant que constituants essentiels, au moins deux composés de formule générale I

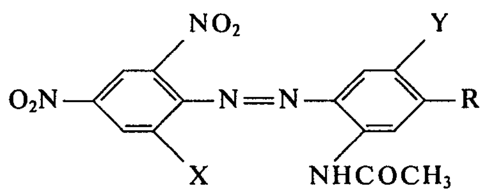

(I)

dans laquelle

X est un atome de chlore ou de brome,
Y est un radical méthoxy ou éthoxy et

R est mis pour 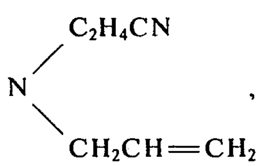 , $NHC_2H_4CN$, $NHCH_2CH{=}CH_2$ ou $N(C_2H_4OCOCH_3)_2$

le colorant de formule I, dans lequel X = Br, Y = $OCH_3$ ou $OC_2H_5$ et R = $N(C_2H_4OCOCH_3)_2$, étant présent à raison de 25 à 45% par rapport au poids total du mélange.

2. Utilisation des mélanges selon la revendication 1 pour la teinture de polyesters synthétiques.